# EUROPEAN PATENT APPLICATION

(11) **EP 2 587 204 A1**
(43) Date of publication of application: **01.05.2013**
(21) Application number: 11187308.9
(22) Date of filing: 31.10.2011
(51) Int. Cl.: F27B 1/22, F27D 17/00, C21B 7/00

(54) **Blast furnace top gas treatment**

(71) Applicant: Paul Wurth Refractory & Engineering GmbH, 55252 Mainz-Kastel (DE)
(72) Inventor: Eschmann, Friedrich, 65474 Bischofsheim (DE); Krone, Teodor, 65307 Bad Schwalbach (DE); Schaub, Eric, 65551 Limburg (DE); Allmannsdörfer, Ralf, 55252 Mainz-Kastel (DE)
(74) Representative: Office Freylinger

(57) **Abstract**

A first aspect of the invention concerns a blast furnace top gas treatment process. The process comprises removing CO₂ from top gas (16) collected at the top of a blast furnace (16). The removal of CO₂ from the top gas is carried out using CO₂-absorbing washing liquid (42, 46), the washing liquid being heated to release the absorbed CO₂. Another part (26) of the CO₂-depleted top gas is burnt in a regenerative heater in order to heat up the regenerative heater and excess heat thereby produced is used at least in part to heat the washing liquid. A second aspect of the invention concerns a blast furnace top gas treatment installation configured for carrying out the process.

## Description

### Technical field

The present invention generally relates to blast furnace top gas treatment, in particular to the reduction of CO₂ content in blast furnace top gas.

### Background Art

Cutting CO₂ emissions has become a major objective of the iron and steelmaking industry in the recent years.

The re-use of top gas in the blast enables notable reductions of CO₂ emissions compared to blast furnace plants, in which the blast consists of air. Top gas recycling installations recover blast furnace top gas and subject it, usually after conventional top gas cleaning, to a recycling process before injecting part of it back into the blast furnace.

Patent application WO 2011/029814 discloses a method for removing CO₂ from the part of the top gas of a blast furnace that is to be re-injected into the furnace. The CO₂-depleted top gas is heated in a regenerative heater and re-injected into the blast furnace. Removal of CO₂ is carried out using chemical and/or physical absorption. The CO₂ removal installation comprises an absorber unit and a stripper unit. In the absorber, a washing liquid (such as e.g. an aqueous amine solution) absorbs CO₂ (and other acid gases, such as H₂S) from the top gas. The washing liquid rich in the absorbed CO₂ is then routed into the stripper, where it is heated up. Thereby, the washing liquid releases the absorbed CO₂ and may be reused in the absorber. The extracted CO₂ may be separated from the other acid gases and fed to a Carbon Capture and Storage (CCS) installation. According to the invention of WO 2011/029814, heat necessary in the stripper for the regeneration of the washing liquid is taken from an air separation plant.

### Technical problem

It is an object of the present invention to provide an efficient solution for CO₂ removal that does not necessitate an air separation plant in close vicinity. This object is achieved by a blast furnace top gas treatment process as claimed in claim 1.

### General Description of the Invention

A blast furnace top gas treatment process comprises removing CO₂ from top gas collected at the top of a blast furnace. The removal of CO₂ from the top gas is carried out using CO₂-absorbing washing liquid, the washing liquid being heated to release the absorbed CO₂. According to the invention, at least a part of the CO₂-depleted top gas is burnt in a regenerative heater to heat it up (during the heating-up phase, the regenerative heater is said to be operated on gas) and excess heat thereby produced is used at least in part to heat the washing liquid.

In the context of the present, the term "CO₂-depleted top gas" is used to designate top gas with reduced CO₂ concentration compared to the top gas collected at the blast furnace top. After removal of CO₂, the top gas may contain a residual concentration of CO₂. Accordingly, "CO₂-depleted top gas" means "top gas poor in CO₂" rather than "top gas free of CO₂".

Due to the removal of CO₂ from the top gas, the heating value of the CO₂-depleted top gas is increased. As indicated above, the regenerative heaters are fired with CO₂-depleted top gas instead of top gas having the original concentration of CO₂ (as it is the case in WO 2011/029814). Consequently, the flame temperature of the burners of the regenerative heaters is higher than usually. On the one hand, this helps to increase the temperature of the blast, which is beneficial to the consumption of coke (see e.g. DE 32 48 249 for reference), on the other hand, the efficiency of the regenerative heaters may suffer because the flue gases produced by the consumption of CO₂-depleted top gas have a higher temperature when they leave the regenerative heater. Thanks to the invention, this excess heat is not lost but used to heat the washing liquid.

According to a preferred embodiment of the invention, the excess heat is extracted from the flue gases produced by the combustion of CO₂-depleted top gas in the regenerative heater that is on gas.

Preferably, the excess heat is transferred to the washing liquid using a heat transfer medium. In particular, the excess heat may be passed from the flue gases to the heat transfer medium in a first heat exchanger and, at least in part, from the heat transfer medium to the washing liquid in a second heat exchanger.

Preferably, CO₂ is removed from flue gases produced by the combustion of CO₂-depleted top gas in the regenerative heater that is on gas. In this case, precombustion capture (i.e. capture of CO₂ before the top gas is burnt) and post-combustion capture (i.e. capture of CO₂ from the waste gases produced in the combustion of top gas) are combined.

Most preferably the removal of CO₂ from the flue gases is carried out using CO₂-absorbing washing liquid, which is heated using part of the excess heat to release absorbed CO₂. A part of the excess heat passed from the flue gases to the heat transfer medium in the first heat exchanger may be passed from the heat transfer medium to the washing liquid used to absorb CO₂ from the flue gases in a third heat exchanger.

Advantageously, CO₂ removed from the top gas and/or the flue gases is fed to a CCS installation or any other CO₂ storage facility, wherein CO₂ may be stored for further use and/or disposal.

The washing liquid may be any washing liquid suitable for the removal of CO₂ from gas. For example, the washing may comprise a solution of monoethanolamine (MEA), diethanolamine (DEA), methyldiethanolamine (MDEA), diisopropylamine (DIPA) and/or diglycolamine (DGA).

An aspect of the present invention concerns a blast furnace top gas treatment installation configured for carrying out the process as described hereinabove. Such a blast furnace top gas treatment installation comprises a CO₂ removal installation arranged to remove CO₂ from top gas collected at the top of a blast furnace and a plurality of regenerative heaters for producing hot blast to be injected into the blast furnace. The CO₂ removal installation comprises an absorber, in which CO₂ may be absorbed from the top gas by a CO₂-absorbing washing liquid, and a stripper, in which the washing liquid may be heated to release absorbed CO₂. The regenerative heaters are operatively connected to the CO₂ removal installation so as to receive at least a part of the CO₂-depleted top gas as fuel when they are operated on gas. The blast furnace top gas treatment installation further comprises a heat transfer installation configured to transfer excess heat produced by the combustion of the CO₂-depleted top gas in the regenerative heaters at least in part to the stripper for heating the washing liquid.

Preferably, the blast furnace top gas treatment installation comprises a further CO₂ removal installation arranged to remove CO₂ from flue gases produced by the combustion of the CO₂-depleted top gas in the regenerative heaters, the further CO₂ removal installation comprising an absorber, in which CO₂ may be absorbed from the flue gases by a CO₂-absorbing washing liquid, and a stripper, in which the washing liquid may be heated to release absorbed CO₂.

Preferably, the heat transfer installation comprises a heat exchanger arranged in an exhaust conduit of the regenerative heaters, the heat exchanger being operatively connected to a heating circuit configured and arranged to transfer heat to the stripper of the CO₂ removal installation and/or to the stripper of the further CO₂ removal installation.

### Brief Description of the Drawings

Preferred embodiments of the invention will now be described, by way of example, with reference to the accompanying drawings in which:
Fig. 1 is a schematic layout of a blast furnace plant equipped with a top gas treatment installation configured for implementing a process in accordance with a first preferred embodiment of the invention;
Fig. 2 is a schematic layout of a blast furnace plant equipped with a top gas treatment installation configured for implementing a process in accordance with a second preferred embodiment of the invention.

### Description of Preferred Embodiments

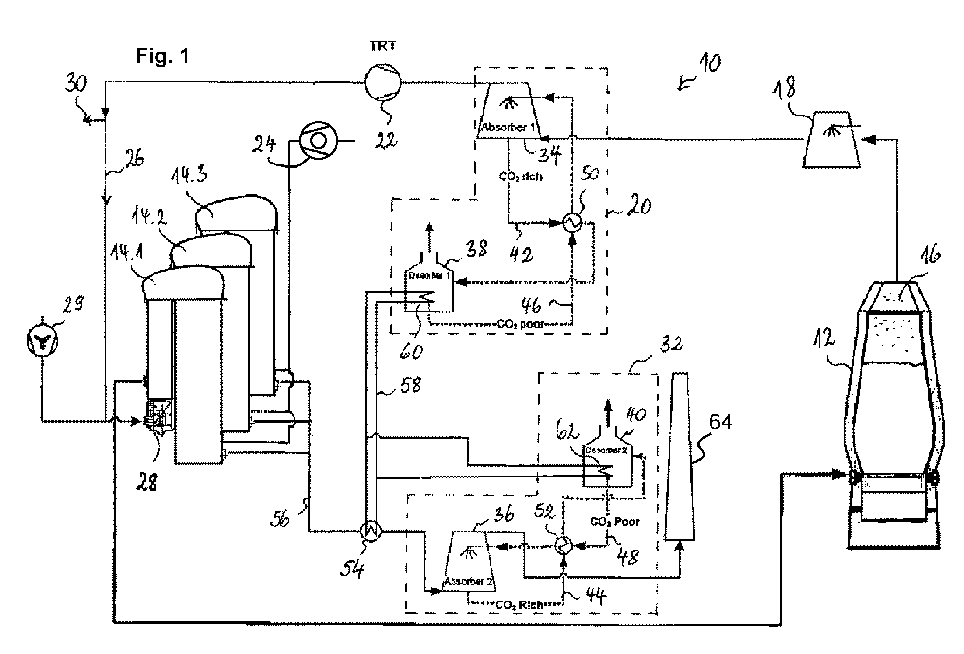

Fig. 1 schematically shows a blast furnace plant 10 equipped with a top gas treatment installation. The blast furnace plant 10 comprises a blast furnace 12 and a plurality of at least three regenerative heaters 14.1, 14.2 and 14.3. The top gas treatment installation recovers top gas 16 from the top of the blast furnace 12. The collected top gas can then be used in the blast furnace plant and/or in other installations as an energy carrier. Furthermore, part of the recovered top gas and/or BOF gas may optionally be injected into the blast furnace, at an upper level thereof, as a reduction gas (not shown in the figures). The top gas and/or the BOF gas may be cold or preheated when re-injected.

The top gas 16 is collected at the top of the blast furnace 12 and subjected to an initial cleaning to remove e.g. dust particles. In the example illustrated in Fig. 1, the cleaning installation 18 is illustrated as a spray washer. Typically, however, the cleaning installation 18 also comprises a dry dust-catcher and, optionally, also an electrical precipitator (not shown).

Downstream of the cleaning installation, the cleaned top gas is subjected to CO₂ removal in a first CO₂ removal installation 20.

The CO₂-depleted top gas is then depressurized using a top gas recovery turbine (TRT) 22 and passed to a top gas network, which the regenerative heaters 14.1, 14.2 and 14.3 are connected to in such a way as to receive the CO₂-depleted top gas as a fuel gas. The regenerative heaters are alternately operated "on blast" and "on gas". The cyclic operations of the regenerative heaters 14.1, 14.2, 14.3 are dephased amongst each other such that, with three regenerative heaters, at any time during the normal operation of the blast furnace plant 10, one of the regenerative heaters 14.1, 14.2, 14.3 is operated on blast while the two others are operated on gas. The transitions between heating and blowing and vice-versa are synchronized, in such a way that when the regenerative heater on blast changes over to on-gas operation, one of the regenerative heaters on gas takes over the blowing.

The regenerative heater that is operated on blast receives air (cold blast) from a blower 24. The air is heated up in the regenerative heater and then injected into the blast furnace 12 as the hot blast.

In the regenerative heaters that are operated on gas, a part 26 of the CO₂-depleted top gas is used to fuel the burners 28 of the regenerative heaters. A fan 29 supplies the burners 28 with air to burn the CO₂-depleted top gas. Another option would be to mix flue gases from the regenerative heaters 14.1, 14.2, 14.3 with pure oxygen to form an oxidizing gas, which the burners 28 use to burn the CO₂-depleted top gas. It should be noted that the CO₂-depleted top gas could also be burnt in pure oxygen, provided that appropriate burners are used.

Any CO₂-depleted top gas 30 that is not re-injected into the blast furnace as reduction gas or burnt to heat up the regenerative heaters may be distributed to other installations via the top gas network. In an integrated steel mill, among the installations that may use the top gas are, for instance, a coke oven plant, a power plant, a hot strip mill etc.

The flue gases produced by the combustion of CO₂-depleted top gas in the regenerative heaters 14.1, 14.2 and 14.3 are supplied to a second CO₂ removal installation 32. After removal of CO₂, the residual flue gases are evacuated through the chimney 64.

Each of the CO₂ removal installations 20, 32 implements a wet CO₂ removal process. Each of the CO₂ removal installations 20, 32 comprises an absorber 34, 36 and a stripper 38, 40. In the absorbers 34, 36, a washing liquid (such as e.g. an aqueous amine solution) is put into contact with the gas to be cleaned (i.e. the top gas from the blast furnace or the flues gases from the regenerative heaters), e.g. by spraying. The washing liquid absorbs CO₂ from the gas stream. The washing liquids rich in the absorbed CO₂ 42, 44 are then routed into the respective stripper 38, 40. In the strippers 38, 40, the washing liquids are heated, whereby the solubility of CO₂ is reduced. As a consequence of the temperature increase, the washing liquids are oversaturated in CO₂, which is therefore released and may be recuperated. The lean washing liquids 46, 48 are recycled into the respective absorbers 34, 36. In each of the CO₂ removal installations 20, 32, a heat exchanger 50, 52 is arranged in the washing liquid conduits between the absorber 34, 36 and the stripper 38, 40, in which heat is transferred from the lean washing liquid 46, 48 coming from the stripper 38, 40 to the rich washing liquid 42, 44 coming from the absorber 34, 36.

Heat that is necessary for the functioning of the CO₂ removal installations 20, 32 is taken from the flue gases produced in the combustion of CO₂-depleted top gas in the regenerative heaters 14.1, 14.2 and 14.3. A heat exchanger 54 arranged in the exhaust conduit 56 of the regenerative heaters 14.1, 14.2 and 14.3 transfers heat (excess heat that has not been taken up by the regenerative heaters) from the flue gases to a heat transfer medium (e.g. water, thermal oil or the like) circulating in a heating circuit 58. The heating circuit 58 is connected to heat exchangers 60 and 62 arranged in the strippers 38 and 40, respectively, which transfer heat from the heat transfer medium to the washing liquid.

The removal of CO₂ from the top gas in the absorber 34 increases the concentration of CO in the residual gas flow (the CO₂-depleted top gas). Accordingly, the heating value (kJ/m³) is increased. As a consequence, if CO₂-depleted top gas is burnt in the regenerative heaters 14.1, 14.2, 14.3, the temperature of the combustion products (flue gases) is higher. If the regenerative heaters have been optimized for a lower flame temperature (obtained with top gas having the original CO₂ concentration), they will be less efficient when fired with CO₂-depleted top gas. The waste gases will carry excess heat away. Thanks to the invention, this excess heat is not lost but used to heat the washing liquids. As those skilled will appreciate, the invention is particularly suited for upgrading existing blast furnace plants, since existing regenerative heaters can continue to be used. In particular, the invention represents an efficient way for removal of CO₂ from the blast furnace process.

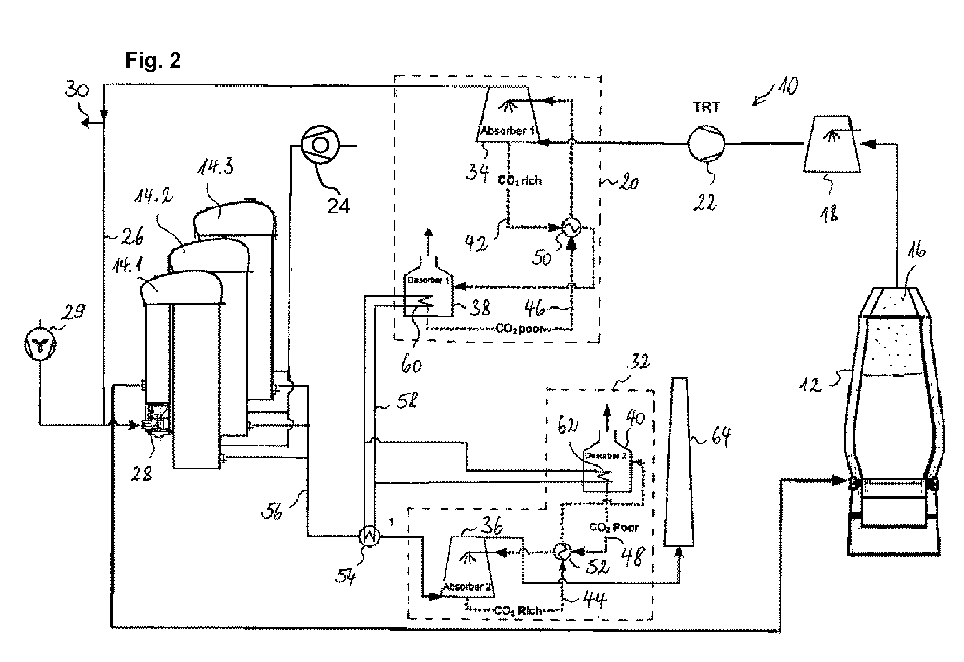

Fig. 2 illustrates a variant of the blast furnace plant of Fig. 1. Whereas in Fig. 1, the first CO₂ removal installation 20 is arranged on the high-pressure side of the top gas recovery turbine 22, in Fig. 2, the first CO₂ removal installation 20 is arranged on the low-pressure side of the turbine 22. In any other respect, Fig. 2 is identical to Fig. 1 and need not be described further. Nevertheless, it is worthwhile noting that the variant of Fig. 1 (top gas cleaning upstream of TRT) is currently believed to be the more advantageous from the thermo-chemical point of view. However, according to this variant, the CO₂ absorption process including the washing liquid has to work under the pressure upstream of the TRT, which means that the first CO₂ removal installation 20 has to be designed for this high pressure. The solution of Fig. 2 has the advantage that the first CO₂ removal installation 20 operates at the lower pressure downstream of the TRT. More practical experience still has to be collected before all the advantages and disadvantages of both variants are finally known.

The CO₂ removed from the top gas and the flue gases, respectively, is preferably transported to a CCS facility and stored in deep geological formations or in the form of mineral carbonates.
While specific embodiments have been described in detail, those skilled in the art will appreciate that various modifications and alternatives to those details could be developed in light of the overall teachings of the disclosure. Accordingly, the particular arrangements disclosed are meant to be illustrative only and not limiting as to the scope of the invention, which is to be given the full breadth of the appended claims and any and all equivalents thereof.

### Legend:

- 10: Blast furnace plant
- 12: Blast furnace
- 14.1, 14.2, 14.3: Regenerative heaters
- 16: Top gas
- 18: Cleaning installation
- 20: First CO₂ removal installation
- 22: Top pressure recovery turbine
- 24: Blower
- 26: Part of CO₂-depleted top gas (supplied as fuel to the regenerative heaters on gas)
- 28: (Internal or external) burner
- 29: Fan
- 30: Excess CO₂-depleted top gas
- 32: Second CO₂ removal installation
- 34, 36: Absorber
- 38, 40: Stripper
- 42, 44: Washing liquid rich in CO₂
- 46, 48: Washing liquid poor in CO₂
- 50, 52: Heat exchanger
- 54: Heat exchanger
- 56: Exhaust conduit
- 58: Heating circuit
- 60, 62: Heat exchangers
- 64: Chimney

## Claims

1. Blast furnace top gas treatment process, comprising:
removing CO₂ from top gas (16) collected at the top of a blast furnace (12);
wherein said removal of CO₂ from said top gas is carried out using CO₂-absorbing washing liquid (42, 46), said washing liquid being heated to release absorbed CO₂;
**characterized in that** at least a part (26) of said CO₂-depleted top gas is burnt in a regenerative heater (14.1, 14.2, 14.3) to heat up said regenerative heater and **in that** excess heat produced by the combustion of said CO₂-depleted top gas in said regenerative heater is used at least in part to heat said washing liquid (42, 46).

2. Blast furnace top gas treatment process as claimed in claim 1, wherein said excess heat is extracted from flue gases produced by said combustion.

3. Blast furnace top gas treatment process as claimed in claim 2, wherein said excess heat is transferred to said washing liquid using a heat transfer medium.

4. Blast furnace top gas treatment process as claimed in claim 3, wherein said excess heat is passed from said flue gases to said heat transfer medium in a first heat exchanger (54) and, at least in part, from said heat transfer medium to said washing liquid in a second heat exchanger (60).

5. Blast furnace top gas treatment process as claimed in any one of claims 1 to 4, wherein CO₂ is removed from flue gases produced by said combustion.

6. Blast furnace top gas treatment process as claimed in claim 5, wherein said removal of CO₂ from said flue gases is carried out using CO₂-absorbing washing liquid (44, 48), which is heated using part of said excess heat to release absorbed CO₂.

7. Blast furnace top gas treatment process according to claims 3, 4 and 6, wherein a part of said excess heat is passed from said heat transfer medium to the washing liquid (44, 48) used to absorb CO₂ from the flue gases in a third heat exchanger (62).

8. Blast furnace top gas treatment process as claimed in any one of claims 1 to 6, wherein CO₂ removed from said top gas is fed to a CCS installation.

9. Blast furnace top gas treatment installation configured for carrying out the process as claimed in any one of claims 1 to 8.

10. Blast furnace top gas treatment installation as claimed in claim 9, comprising a CO₂ removal installation (20) arranged to remove CO₂ from top gas (16) collected at the top of a blast furnace (12);
a plurality of regenerative heaters (14.1, 14.2, 14.3) for producing hot blast to be injected into said blast furnace (12);
wherein said CO₂ removal installation comprises an absorber (34), in which CO₂ may be absorbed from said top gas (16) by a CO₂-absorbing washing liquid (42, 46), and a stripper (38), in which said washing liquid (42, 46) may be heated to release absorbed CO₂;
characterized said regenerative heaters (14.1, 14.2, 14.3) are operatively connected to said CO₂ removal installation (20) so as to receive at least a part (26) of said CO₂-depleted top gas as fuel when they are operated on gas, and in that said blast furnace top gas treatment installation comprises a heat transfer installation (54, 58, 60, 62) configured to transfer excess heat produced by the combustion of said CO₂-depleted top gas in said regenerative heaters (14.1, 14.2, 14.3) at least in part to said stripper (38) for heating said washing liquid.

11. Blast furnace top gas treatment installation as claimed in claim 10, comprising a further CO₂ removal installation (32) arranged to remove CO₂ from flue gases produced by the combustion of said CO₂-depleted top gas in said regenerative heaters (14.1, 14.2, 14.3), said further CO₂ removal installation (32) comprising an absorber (36), in which CO₂ may be absorbed from said flue gases by a CO₂-absorbing washing liquid (44, 48), and a stripper (40), in which said washing liquid (44, 48) may be heated to release absorbed CO₂.

12. Blast furnace top gas treatment installation as claimed in claim 10 or 11, wherein said heat transfer installation comprises a heat exchanger (54) arranged in an exhaust conduit of said regenerative heaters (14.1, 14.2, 14.3), said heat exchanger (54) being operatively connected to a heating circuit (58) configured and arranged to transfer heat to the stripper (38) of said CO₂ removal installation (20) and/or to the stripper (36) of said further CO₂ removal installation (32).
